# EUROPEAN PATENT SPECIFICATION

(11) **EP 2 617 166 B1**
(45) Date of publication and mention of the grant of the patent: **13.01.2016**
(21) Application number: 11825503.3
(22) Date of filing: 16.09.2011
(51) Int. Cl.: H04L 12/46, H04L 12/18

(54) **METHOD AND APPARATUS FOR REDUCING RECEIVER IDENTIFICATION OVERHEAD IN IP BROADCAST NETWORKS**
VERFAHREN UND VORRICHTUNG ZUR REDUZIERUNG VON EMPFÄNGERKENNZEICHNUNGS-OVERHEADS IN IP-RUNDFUNK-NETZWERKEN
PROCÉDÉ ET APPAREIL PERMETTANT DE LIMITER LE SURDÉBIT POUR L'IDENTIFICATION D'UN RÉCEPTEUR DANS LES RÉSEAUX DE DIFFUSION IP

(30) Priority: 17.09.2010 NO 20101300
(43) Date of publication of application: 24.07.2013
(73) Proprietor: Marlink AS, 1366 Lysaker (NO)
(72) Inventor: KLABACKA, Jan, N-3084 Holmestrand (NO); BARZDINS, Guntis, Riga LV-1011 (LV)
(74) Representative: Wesmann, Johan Fredrik
(86) International application number: PCT/NO2011/000258
(87) International publication number: WO 2012/036566

(56) References cited:
- US-A1- 2003 070 007
- US-A1- 2006 013 255
- US-A1- 2008 247 396
- US-A1- 2009 034 528
- US-A1- 2010 228 974
- US-B1- 7 760 723

## Description

### FIELD OF THE INVENTION

This disclosure relates to the transmission of communications over data network, and more particularly, to methods, apparatus, and articles of manufacture for reducing use of bandwidth in communications over Internet Protocol broadcast network by embedding the receiver identification inside the data field of the Internet Protocol packet.

### BACKGROUND OF THE INVENTION

Network communications are generally comprised of one or more data packets, representing packages of information, each being transmitted as a single unit from a source to a destination on a network. Because each data packet has a finite maximum size defined by the protocols and/or standards used on the network, the number and length of data packets necessary to deliver a communication from a source point on the network to a destination point on the network may vary depending on the overall size of the communication, such as e.g., the number of bytes of data comprising a message or file to be transmitted over the network, and the network parameters, such as e.g., the Maximum Transmission Unit supported by the network. Every data packet of the communication, however, follows the same basic organizational pattern, incorporating information into the data packet to enable the network's communication protocols to deliver the communication to the intended recipient.

Many pieces of information are generally incorporated into each data packet to facilitate delivery and error checking of a segment of the communication included in a given data packet. In a standard Transmission Control Protocol/Internet Protocol termed "TCP/IP", where TCP refers to the IETF standard RFC 793, Sep. 1, 1981, and IP refers to either the IPv4 (version 4) IETF standard RFC 791, Sep. 1, 1981, or the IPv6 (version 6) IETF draft standard RFC 2460, December 1998, protocol suite, commonly used for data transmission over interconnected communication media, such as an Ethernet network, an analog modem, a cable modem, a Digital Subscriber Line ("DSL") modem, an optical carrier interface, such as e.g., OC-3, a satellite transmission interface, a wireless interface, or other interfaces for coupling a device to other devices, the data packet overhead may include link layer framing header and footer, IP and TCP headers of network and transport layer, as well as other application or layer headers, such as secure sockets layer, an encapsulating security payload standard, or the like. Elements of the data packet overhead provide several functions, including addressing, routability, reliability, and so on. Each data packet also typically includes a payload section, that portion of the data packet that contains the data to be communicated over the network, such as e.g. a portion of a file or web page, and is the only part of the data packet not considered overhead. The ratio of the number of bytes available in the data packet for the payload section to the data packet overhead, determines the bandwidth efficiency of the transmission. For example, if 10% of a data packet comprises overhead on a 100Mbps network connection, then the efficiency of the transmission is 90 Mbps of the data throughput.

IP data packet tagging is a widely used technique to enable logically independent IP networks to be transmitted, routed or switched over the shared transport network.

Tag information can be carried in a packet in a variety of ways:
- As a small "shim" tag header inserted between the Layer 2 and the network-layer headers (such as e.g. Ethernet IEEE 802.1Q VLAN)
- As part of the Layer 2 header, if the Layer 2 header provides adequate semantics (such as ATM,, FrameRelay DLCI, MPLS label)
- As part of the network-layer header (such as using the Flow Label field in IPv6 or Stream ID option in IPv4 with appropriately modified semantics, or chaining the network layer header to subheaders of IPsec)
- As part of tunnelling header (such as in GRE tunnelling, PPTP tunnelling and VPN in general)

IP broadcast network here refers to any setup that includes the transmitter and plurality of receivers, such that the IP data packets transmitted by the transmitter arrive at all receivers. IP broadcast network considered for the purpose of describing the present invention provides only one-way delivery of IP packets from the transmitter to the receivers, however, transmission of IP packets in the opposite direction may be provided by some unrelated technology. IP broadcast networks can be implemented through many techniques, including tchniques such as e.g. Ethernet network, cable modem, satellite transmission modem, a wireless modem, or other interfaces for coupling a device to other devices, or coupling a transmit interface to many receive interfaces within the same device.

Document US 2009/0034528 published on 05-02-2009 discloses a method for compressing and restoring an IP packet which is transmitted through a broadcast network.

The present disclosure relates to the situation where logically independent IP networks need to be transmitted over shared IP broadcast network. Although some of above mentioned well known tagging protocols are applicable also in case of IP broadcast networks, they have certain shortcomings. For example, use of Stream ID option in IPv4 or Flow Label in IPv6 header for tagging is not entirely transparent, because it modifies the said fields in the IP packet headers. Use of layer 3 tunneling or VPN protocols is possible, but it creates substantial tunneling overhead well above the actual tag bits. Use of layer 2 tagging protocols like Ethernet IEEE 802.1Q VLAN, FrameRelay DLCI, MPLS is not possible over IP broadcast networks, because layer 2 frames cannot be transported over IP broadcast network, which is a layer 3 network.

The Layer 2 and Layer 3 tagging methods indicated above, which clearly are not well suited for IP broadcast networks, involve the use of fixed-length tags, which are typically either too short or too long for the particular application domain. The overhead created by improper tag-length and extra information fields is particularly relevant for short IP packets, such as in IP telephony, where the overhead of known solutions often occupies a substantial part of the bandwidth allocated to the service.

According to the present invention, by allowing the user of the IP broadcast network to choose other tag-lengths which measured in bytes are within a range from 1 byte up to several bytes for the IP packets, and applying the tag to the IP packet with no other overhead fields being added by the tagging mechanism, the overhead would become considerably less than what is the case with existing solutions for IP broadcast networks, thus increasing the efficiency of the IP brodcast network.

### SUMMARY OF THE INVENTION

The present invention provides methods and apparatus according to the accompanying patent claims.

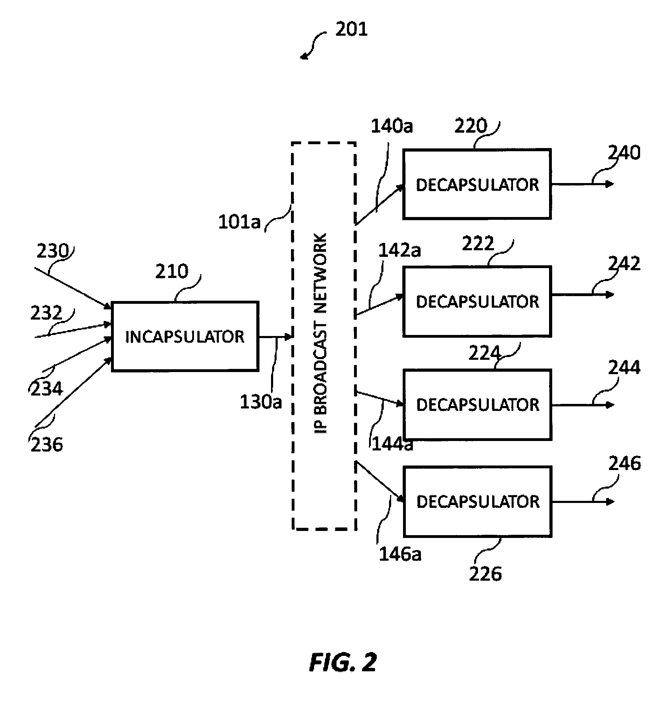

According to the invention, rather than encapsulating the original IP packets inside external Layer2 or Layer3 headers, a fixed number of tagging bytes are added to the data field inside the original IP packet at a well defined location in its payload, such as e.g., at the end of data field, and the IP header fields are modified accordingly to ensure that the modified packet is still a completely valid IP data packet. After inspection at the receive side, the tagging bits are removed from the data field, and the exact copy of the original IP data packet is restored. By using short tags, such as e.g. tags of length 1 byte, a significant overhead reduction is obtained. It is to be understood that the present invention relies upon an IP data packet brodcast network in which only IP data packets modified according to the encapsulator of the invention are allowed to enter, as illustrated in figure 2. Hence, only IP data packets modified according to the encapsulator arrive at decapsulators at the receiving side of the IP data packet brodcast network employed for an exploitation of the present invention.

### BRIEF DESCRIPTION OF THE DRAWINGS

In the drawings, like reference numerals refer to the same elements throughout the various views of what should be considered embodiments that exemplify the present invention, and wherein:
FIG. 1 is a block diagram illustrating one embodiment of an IP broadcast network in accordance with the teachings of the present invention;
FIG. 2 is a block diagram of one embodiment of a complete system representative of teachings of the present invention;
FIG. 3 is an illustration representing one embodiment of an IP data packet and modified IP data packet in accordance with the teachings of the present invention;
FIG. 4A is an illustration representing one embodiment of an Internet Protocol version 4 header in accordance with the teachings of the present invention; and
FIG. 4B is an illustration representing another embodiment of an Internet Protocol version 6 header in accordance with the teachings of the present invention.
FIG. 5 is an illustration representing a concrete IPv4 data packet undergoing the modifications in accordance with the teachings of the present invention.
FIG. 6 is an illustration representing a concrete IPv6 data packet undergoing the modifications in accordance with the teachings of the present invention.
FIG. 7 is a flow chart representing processing steps carried out by incapsulator in accordance with the teachings of the present invention is shown.
FIG. 8 is a flow chart representing processing steps carried out by decapsulator in accordance with the teachings of the present invention is shown.
FIG. 9 is a sequence diagram representing two embodiments of overall IP data packet transport through the entire system in accordance with the teachings of the present invention is shown.

### DETAILED DESCRIPTION OF THE INVENTION

Embodiments of methods, apparatus, and articles of manufacture for reducing frame overhead on local and wide area networks are described in detail herein. In the following description, numerous specific details are provided, such as the identification of various system components, to provide a thorough understanding of embodiments of the invention. One skilled in the art will recognize, however, that the invention can be practiced without one or more of the specific details, or with other methods, components, materials, etc. In still other instances, well-known structures, materials, or operations are not shown or described in detail to avoid obscuring aspects of various embodiments of the invention.

Reference made throughout this specification to "one embodiment" or "an embodiment" means that a particular feature, structure, or characteristic described in connection with the embodiment is included in at least one embodiment of the present invention. Thus, the appearance of the phrases "in one embodiment" or "in an embodiment" in various places throughout this specification are not necessarily all referring to the same embodiment. Furthermore, the particular features, structures, or characteristics may be combined in any suitable manner in one or more embodiments.

As an overview, embodiments of the invention provide methods, apparatus, and articles of manufacture for reducing use of bandwidth in communications over Internet Protocol broadcast network by embedding the receiver identification inside the data field of the Internet Protocol packet. Other features of the illustrated embodiments will be apparent to the reader from the foregoing and the appended claims, and as the detailed description and discussion is read in conjunction with the accompanying drawings.

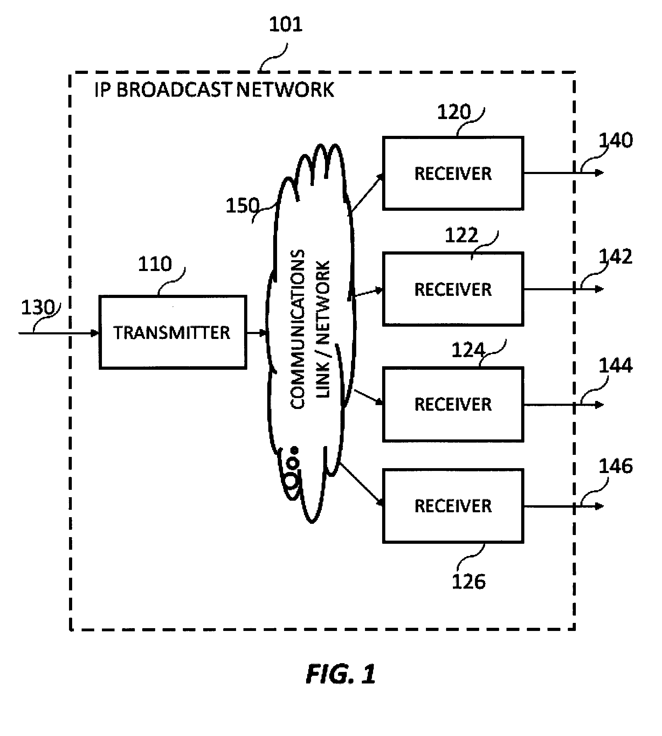

Referring now to the drawings, and in particular to FIG. 1, there is illustrated a block diagram showing one embodiment of an IP broadcast network generally at 101 in accordance with the teachings of the present invention. The IP broadcast network 101 includes a transmitter 110 and a plurality of receivers 120, 122, 124, and 126, interconnected via a communications link or network 150 to enable IP data packets transmitted by transmitter 110 to arrive at the receivers 120, 122, 124, and 126. The communications link or network 150 may comprise wires, cables, optical fibers, or other physical connections such as IP routers or LAN switches or devices which include functionality of IP routers or LAN switches in various embodiments of the invention. In other embodiments, the communications link 150 may comprise a plurality of wireless links utilizing some portion of the electromagnetic spectrum, such as for example, but not limited to, radio frequency or infrared signals. In still other embodiments, the communications link 150 may comprise a satellite communications link, or any combination of the foregoing.

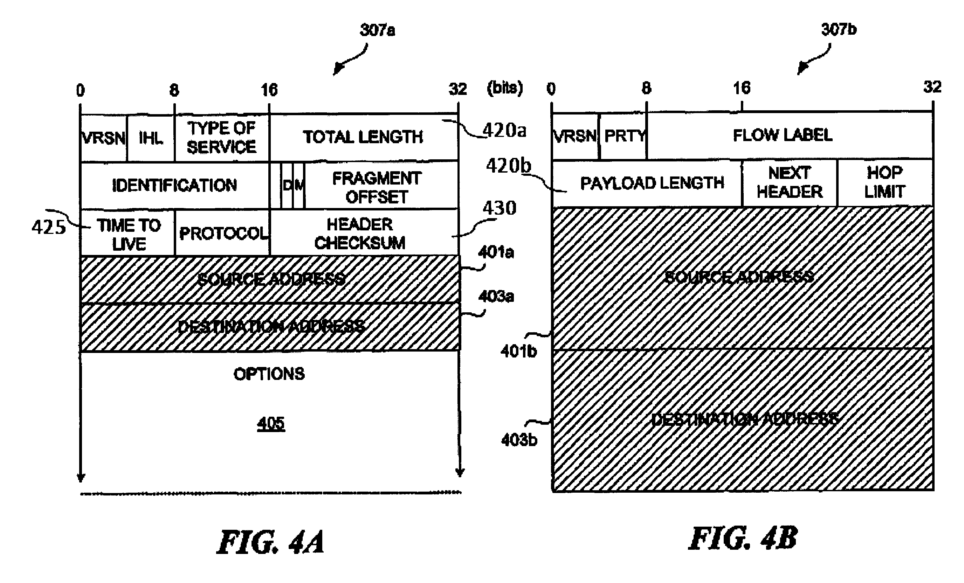

The IP broadcast network 101 receives IP data packets via interface 130 and outputs copies of the same IP data packet via interfaces 140, 142, 144, and 146. In one embodiment IP broadcast network 101 may pass the IP data packets from input interface 130 towards output interfaces 140, 142, 144, and 146 without modification. In another embodiment IP broadcast network 101 may reduce Hop-Limit (in IPv6 header 307b, FIG 4b) or reduce Time-To-Live field and recalculate Header-Checksum (in the IPv4 header 307a, FIG 4a) according to regular IP forwarding practice through the IP routers or hosts, well known to those skilled in the art.

A particular embodiment of IP broadcast network 101 is characterized by the Maximum Transmission Unit (MTU) defining the maximum length of IP data packet it would pass through as a single IP data packet without fragmentation. For implementing the present invention, the IP broadcast network is required not to fragment tagged IP packets. This can be ensured either by having sufficiently large MTU on IP broadcast network or by prefragmenting IP packets to lower MTU prior to incapsulation (if IP packet is fragmented, fragments are tagged independently as independent IP data packets). In practice such prefragmentation is rarely needed, because IP packets on Internet are typically not longer than 1500 bytes due to Ethernet LAN standards; meanwhile modern IP broadcast equipment typically can handle higher MTU than 1500 bytes thus providing room for sufficient number of tagging bytes without fragmentation (assuming that 16 tagging bits (2 bytes) are used the procedure of this invention increases the length of every IP packet only by 2 bytes).

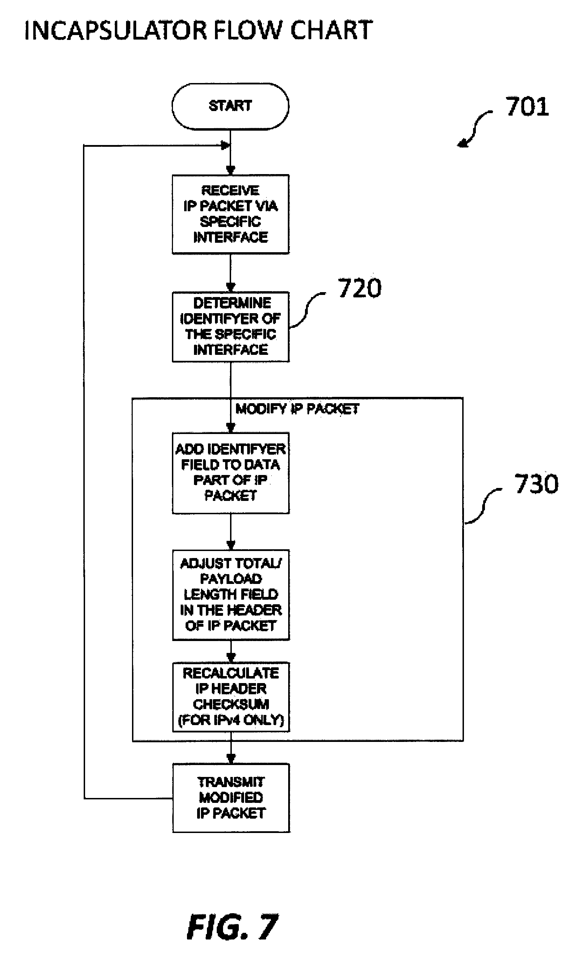

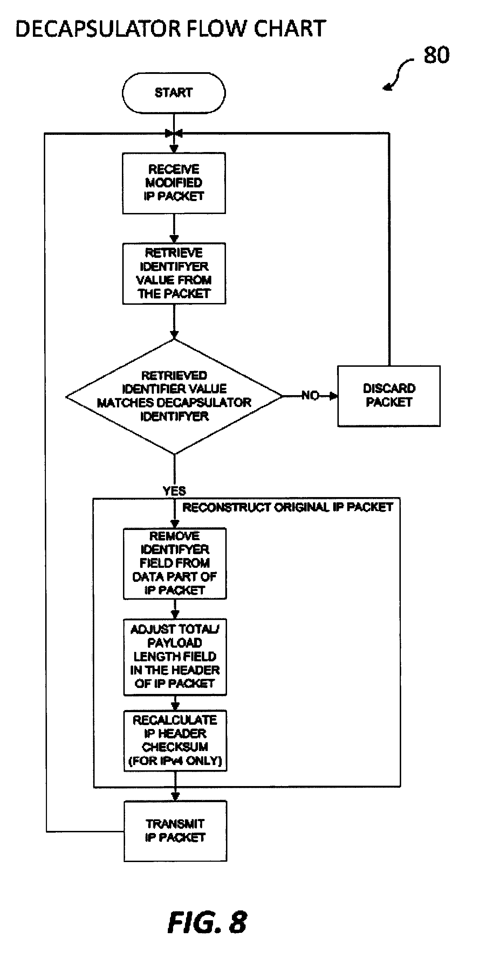

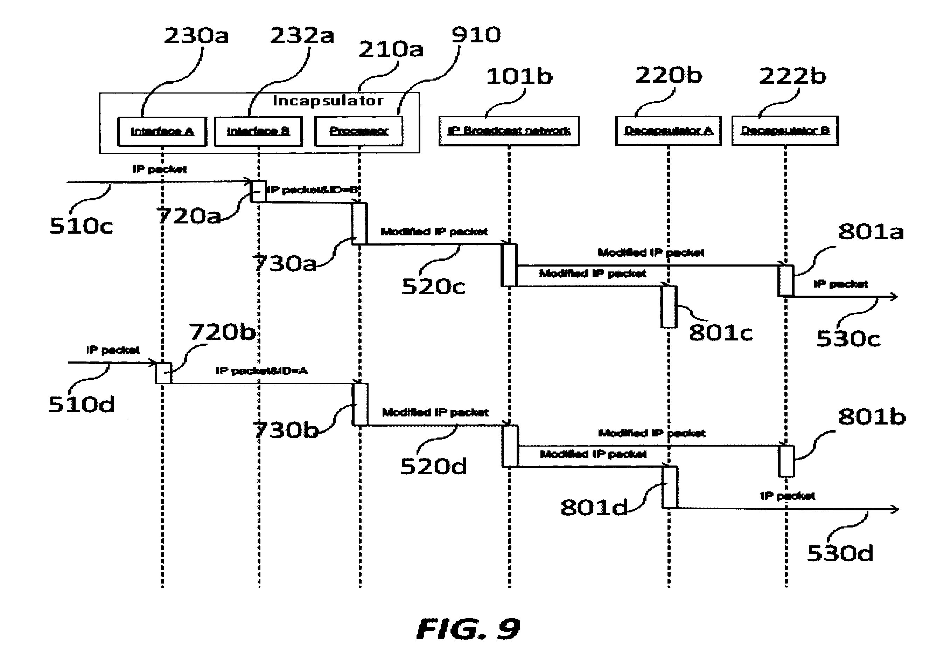

With reference now primarily to FIG. 2, block diagram illustrating one embodiment of the entire communications system 201 including incapsulator 210, IP broadcast network 101 a, and plurality of decapsulators 220, 222, 224, and 226 in accordance with the teachings of the present invention is shown. The system 201 enables incapsulator 210 via output interface 130a to deliver IP packets over IP broadcast network 101 a to decapsulators 220, 222, 224, and 226 via their input interfaces 140a, 142a, 144a, and 146a. Incapsulator 210 is a machine, such as a computer, that passes IP data packets from the input interfaces 230, 232, 234, 236 to output interface 130a and applies modifications to the said IP data packet according to the methods described in this invention as illustrated by the flow chart in FIG.7. Also decapsulators 220, 222, 224, and 226 are machines, such as computer, that pass through IP data packets from the input interfaces 140a, 142a, 144a, 146a to respective output interfaces 240, 242, 244, 246, and apply modifications to the said IP data packets according to the methods described in this invention as illustrated by the flow chart in FIG.8. The overall result of system 201 illustrated by the example of figure 2, is that it delivers IP data packets entering the system on the input interface 230 only to the output interface 240, the IP data packets entering the system on the input interface 232 only to the output interface 242, the IP data packets entering the system on the input interface 234 only to the output interface 244, and so on, despite all IP packets traversing a shared IP broadcast network in between. Reference is also made to FIG. 9, which provides a sequence diagram additionally illustrating this system behavior.

The input interfaces of 230, 232, 234, 236 of the incapsulator 210 do not need to be physically separate interfaces, as IP packets may enter incapsulator over the same physical interface, but be tagged through some independent tagging mechanism (such as VLAN identifier) which enables IP packets to be logically perceived as entering incapsulator over separate virtual interfaces.

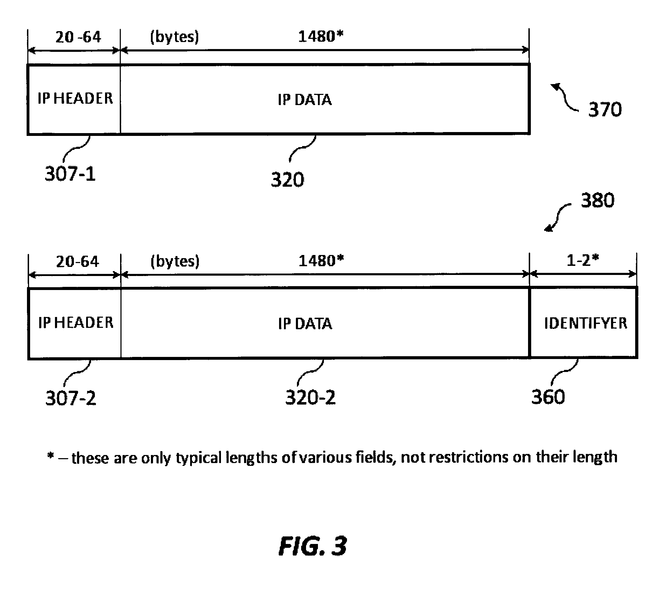

With reference now primarily to FIG. 3, an illustration representing one embodiment of an IP data packet 370 and a corresponding modified IP data packet 380 in accordance with the teachings of the present invention is shown. The main purpose of this figure is to show location of the identifier (tag) field 360, which is appended to the data field 320-2. The preffered (first) embodiment would be to introduce identifier bytes as last bytes of data field for the simplicity of processing, not having to move data bytes after introduction of identifier bytes. Also removal of identifier bytes at the receiving end is simplified if identifier bytes are the last bytes of the data field.

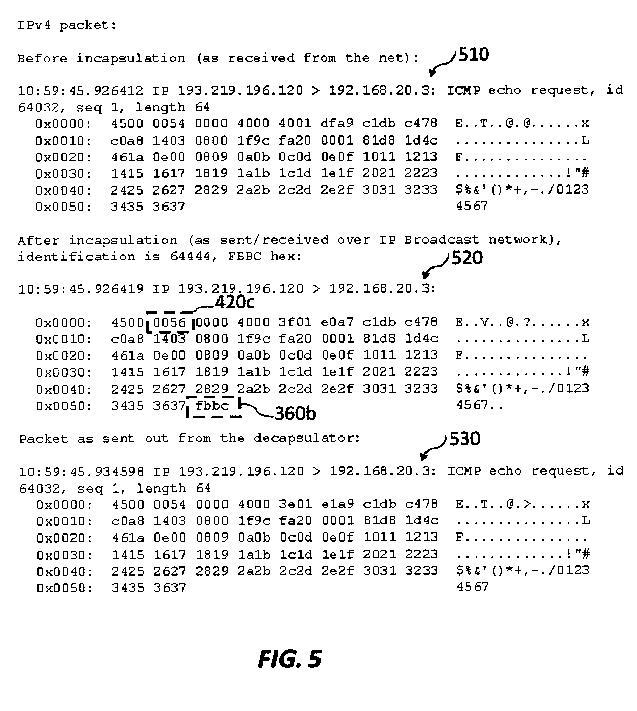

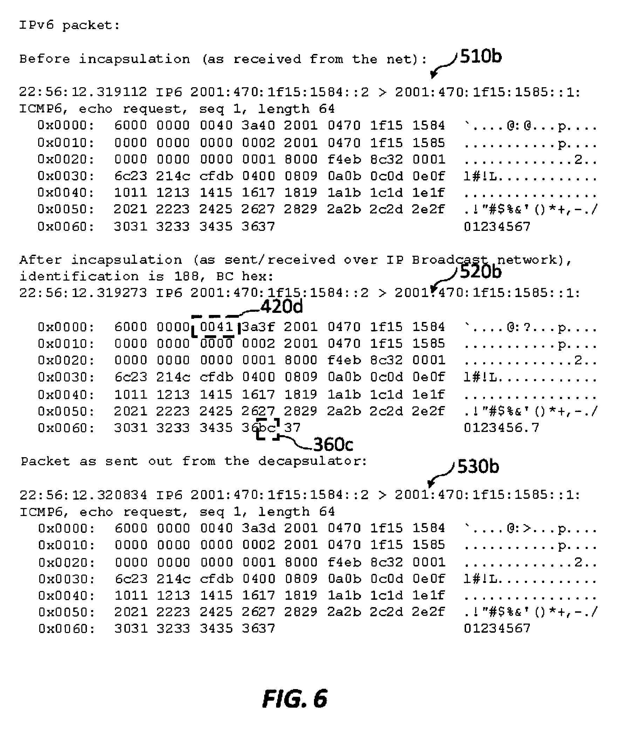

Such appending of the identifier to the IP data field 320-2 rather than to the IP header 307-2 or some external or tunneling encapsulation header gives rise to the "incapsulation" name used to differentiate the disclosed method. When identifier 360 is added at the end of IP data field 320-2 in the modified IP data packet 380, also IP header 307-2 is modified compared to IP header 307-1 to correctly reflect the increased total length of the modified IP data packet 380 compared to IP data packet 370. In another embodiment also Time-To-Live (IPv4) or Hop-Limit (IPv6) fields in IP header 307-2 may be modified according to regular practice of IP forwarding, as one skilled in the art would recognize. In case of IPv4, the Header-Checksum has to be updated to correctly checksum the modified IP header 307-2 fields. The goal of this modification is that the modified IP data packet 380 is still a completely valid IP data packet, despite now containing additional identifier bytes in the data field. This FIG. 3 is meant only as a high-level illustration, whereas concrete detailed examples for IPv4 and IPv6 data packets are provided later in FIG. 5 and FIG.6, respectively.

With reference now primarily to FIGS. 4A and 4B, two embodiments of the IP header (307-1 and 307-2 in FIG. 3) are represented as diagrams showing the elements of each header in accordance with the teachings of the present invention. The IPv4 header 307a illustrated in FIG. 4A comprises a variety of individual data units including a 4 byte source address data unit 401 a to contain a logical source address such as an IP address, a 4 byte destination address data unit 403a to contain a logical destination address such as an IP address, a 2 byte total length data unit 420a to contain the length in bytes of the total IP packet, and an options data unit 405 that may vary in size from 0 bytes to 44 bytes. Similarly, the IPv6 header 307b illustrated in FIG. 4B comprises a variety of individual data units including a 12 byte source address data unit 401b to contain a logical source address such as an IP address, a 12 byte destination address data unit 403b to contain a logical destination address such as an IP address, and a 2 byte payload length data unit 420b to contain the length in bytes of the data (payload) section of the IP packet. Other elements of the IP headers 307a and 307b are well known to those skilled in the art and will not be discussed in detail herein.

With reference now primarily to FIG. 5, an illustration representing a concrete IPv4 data packet undergoing the modifications in accordance with the teachings of the present invention is shown. Original IP data packet 510 enters the incapsulator 210 of the communication system 201 via one of the input interfaces 230, 232,234, or 236. In this embodiment, we will assume it enters via interface 232. Incapsulator 210 processes the IP data packet and creates the modified IP data packet 520 by appending a 2 byte hexadecimal "fbbc" identifier 360b to its IP data field 320-2 and by increasing the total length field 420c by 2 accordingly. Different identifier 360b values may be used for packets entering incapsulator via different input interfaces 230, 232, 234, or 236 and the same identifiers are used also in corresponding decapsulators 220, 222, 224, 226. The incapsulator 210 outputs the modified IP data packet 520 via interface 130a, where the data packet enters IP broadcast network 101a. The IP data broadcast network 101a copies this modified IP data packet further, to appear on all output interfaces 140a, 142a, 144a, and 146a. Decapsulators 220, 222, 224, 226 compare their identifier to the identifier field 360b containing hexadecimal value "fbbc" present in the received modified IP data packet 520 , and, if the identifiers do not match, then the IP packet is discarded, typically by demodulators 220, 224, 226 If the identifiers do match, typically in demodulator 222, then the modified IP data packet 520 is processed to recover the IP data packet 530 through removal of 2 byte identifier field 360b and reducing the Total-Length field 420c by 2 in IP header.

After remodification of the IP data packet by extraction of the identifier field and adjustment of the total-length field, the remodified IP data packet 530 then is forwarded via decapsulator 222 output interface 242. Apart from Time-To-Live 425 and Header-Checksum 430 fields, which are modified according to regular practice of IP forwarding, as one skilled in the art would recognize, it can be seen in this embodiment example that the IP data packets 510 and 530 are identical. In the embodiment example discussed now, the Time-To-Live value is reduced by 1 in every hop, and Header-Checksum value is recalculated to match the changed header fields.

With reference now primarily to FIG. 6, an illustration representing a concrete IPv6 data packet undergoing the modifications in accordance with the teachings of the present invention is shown. Original IP data packet 510b enters the incapsulator 210 of the communication system 201 via one of the input interfaces 230, 232, 234, or 236.In this embodiment, we will assume it enters via interface 232. Incapsulator 210 processes the IP data packet and creates the modified IP data packet 520b by inserting one identifier byte 360c with hexadecimal value "bc" into its IP data field 320-2 and increasing the payload length field 420d by one. To illustrate another possible embodiment, here identifier byte is not inserted at the end of data field, but rather before the last byte of the data filed; generally any predefined location within the data field can be used. The incapsulator 210 outputs the modified IP data packet 520b via interface 130a, where it enters the IP broadcast network 101 a. Different identifier 360c values are used for packets entering incapsulator via different input interfaces 230, 232, 234, or 236 and the same identifier is used also in corresponding decapsulators 220, 222, 224, 226. IP data broadcast network 101a further copies this modified IP data packet to appear on all output interfaces 140a, 142a, 144a, and 146a. Decapsulators 220, 222, 224, 226 compare their identifier to the identifier field 360c present in the received modified IP data packet 520b - if the identifiers do not match, the IP packet is discarded, typically in demodulators 220, 224, 226, if the identifiers do match, matching test typically done in demodulator 222, then modified IP data packet 520b is processed to recover the IP data packet 530b through removal of identifier field 360b and reducing payload length field accordingly. The IP data packet 530b then is forwarded via decapsulator 222 output interface 242. It can be seen in this embodiment that the IPv6 data packets 510b and 530b are identical, apart from Hop Count field, which is modified to regular practice of IP forwarding, as one skilled in the art would recognize.

With reference now primarily to FIG. 7, a flow chart representing processing steps carried out by incapsulator in accordance with the teachings of the present invention is shown. The process starts with receiving the IP data packet in the incapsulator via specific input interface and is followed by determining 720 of the identifier value to be assigned to the IP data packets entering the incapsulator via this specific interface. Because different identifier values are used for different input interfaces and the same identifier values are used in corresponding decapsulators, the input interface identifier value identifies the decapsulator with the same identifier value, which will eventually output the IP data packets received on this specific input interface of incapsulator. To ensure one-to-one mapping between input interfaces of incapsulator and the corresponding decapsulators, different identifier values could be used for every pair of incapsulator input interface and corresponding decapsulator. The next step 730 is to modify the IP data packet by inserting identifier bytes in the predetermined location of the payload section of the IP data packet, and replacing the packet length value by a new packet length value being equal to the sum of the packet length value and the identifier byte number, to generate a modified IP data packet. Typically a fixed number C of identifier bytes are added at the end of the data field; however, in another embodiment variable number of identifier bytes can be added to IP data packet provided that the actual number of identifier bytes C is included as the first fixed byte of the identifier. For IPv4 data packets only, an additional step of recalculating IPv4 header checksum is performed. Finally, the modified IP data packet is output via incapsulator output interface 130a.

With reference now primarily to FIG. 8, a flow chart representing processing steps carried out by decapsulator in accordance with the teachings of the present invention is shown. The process starts with receiving the modified IP data packet in the decapsulator via its input interface and is followed by retrieving the identifier bytes containing identifier value embedded in the predetermined location inside the data field of the IP packet, typically a fixed number C of bytes at the end of the data field. As the next step decapsulator examines the identifier bytes in the modified IP data packet to determine if the identifier bytes correspond to the identifier of the specific decapsulator. If correspondence is not determined, the modified IP data packet is discarded. If correspondence is determined, decapsulator reconstructs the original IP data packet from the modified IP data packet by removing identifier bytes from the data field of the modified IP packet and adjusting IP data packet total length (IPv4) or payload length (IPv6) fields accordingly. For IPv4 data packets only additional step of recalculating IPv4 header checksum performed. Finally the reconstructed original IP data packet is transmitted via decapsulator output interface.

With reference now primarily to FIG. 9, a sequence diagram representing two embodiments of overall IP data packet transport through the entire system 201 in accordance with the teachings of the present invention is shown. The first embodiment shows IP data packet 510c entering the incapsulator 210a on interface 232a with identifier B and being modified by incapsulator according to steps described in flow chart 701 from FIG. 7 to produce modified IP data packet 520c which is then broadcast over IP broadcast network 101b; the broadcasted modified IP data packet 520c is received by all decapsulators 220b and 222b, which both process the modified IP data packet according to flow chart 801 from FIG.8; only the decapsulator 222b outputs the IP data packet 530c because it has the same identifier B as the input interface 232a on which the original IP packet 510c entered the system. Similarly, the second embodiment shows IP data packet 510d entering the incapsulator 210a on the interface 230a with identifier A, which similarly to the previous embodiment causes the entire system to output IP data packet 530d only from decapsulator 222b, which has the same identifier A as the input interface 230a on which the original IP packet 510d entered the system.

The illustrated and described embodiments, including what is described in the abstract of the disclosure, are therefore to be considered in all respects as illustrative and not restrictive. The scope of the invention is indicated by the appended claims rather than by the foregoing description, and all changes which come within the meaning and range of equivalency of the claims are intended to be embraced therein.

## Claims

1. A method for reducing use of bandwidth in transporting an IP data packet having a data field and in the header a packet length field holding a packet length value L over an IP broadcast network from a broadcasting incapsulator to a specific receiving decapsulator among a plurality of decapsulators adapted to receive IP data packets, whereby the method comprises
- receiving the IP data packet in the incapsulator (210),
- processing (730) in the incapsulator, the IP data packet by introducing into the data field a number C of identifier bytes to represent an identifier of the specific decapsulator, and replacing the packet length value L by a new packet length value L' being equal to the sum of the packet length value L and the identifier byte number C, to generate a modified IP data packet,
- recalculating the header checksum in the modified IP data packet if the IP data packet is an IPv4 data packet,
- broadcasting the modified IP data packet from the incapsulator,
- receiving the modified IP data packet in the decapsulator (220, 222, 224, 226),
- examining in the decapsulator, the identifier bytes in the modified IP data packet to determine if the identifier bytes correspond to the identifier of the specific decapsulator, and
- if correspondence is determined, processing in the decapsulator, the modified IP data packet by removing the identifier bytes from the data field and replacing the new packet length value L' by the packet length value L obtained by subtracting the identifier byte number C from the new packet length value L', to recover the IP data packet, and outputting the IP data packet from the decapsulator.

2. The method of claim 1, wherein the long IP data packets are prefragmented into multiple fragment IP data packets prior to applying steps described in claim 1, to avoid IP data packets being fragmented by the IP broadcast network.

3. The method of claim 1, wherein introducing identifier bytes into the data field comprises introducing the identifier bytes as the last bytes of the data field.

4. The method of claim 1, wherein introducing identifier bytes into the data field comprises introducing the identifier bytes in any predetermined location in the data field.

5. The method of claim 1, wherein a single identifier byte is added to the IP data packets in the incapsulator, thereby reducing bandwidth required for identification of the receiving decapsualtor compared to other known identification methods such as MAC addresses, VLAN, IP tunneling, MPLS, IPsec which all add multiple bytes of overhead per IP data packet.

6. The method of claim 1, wherein a plurality of identifier bytes are added to the IP data packets in the incapsulator, thereby providing room for identifying large number of the receiving decapsulators, or for allowing use of multi-byte identifiers to transport additional information from the incapsulator to decapsulators (such as MPLS tags, MAC addresses, VLAN identifiers, QoS parameters, etc.)

7. The method of claim 1, wherein modified IP data packets are broadcasted over legacy infrastructure, such as IP routers or transmission equipment incorporating IP routers, capable to transport only legal IP data packets.

8. The method of any of the previous claims, comprising providing an IP data packet broacast enabled transmitting node with the encapsulator.

9. The method of any of the previous claims, comprising providing an IP data packet broacast enabled receiving node with the decapsulator.

10. An IP broadcast network telecommunication apparatus, for reducing use of bandwidth in transporting an IP data packet having a data field and in the header a packet length field holding a packet length value L over the IP broadcast network from transmitting node of the IP broadcast network to a specific receving node among a plurality of receiving nodes of the IP broadcast network, whereby the apparatus comprises an IP data packet broadcasting incapsulator device (210) including
- an input for receiving the IP data packet,
- a processor in communication with the input for generating a modified IP data packet, the processor being adapted to introduce into the data field of the received IP data packet a number C of identifier bytes to represent an identifier corresponding to the specific receiving node, and to replace the packet length value L by a new packet length value L' being equal to the sum of the packet length value L and the identifier byte number C, and to recalculate IPv4 header checksum in the modified IP data packet if the received IP data packet is according to IPv4, and
- an IP data packet broadcasting device in communication with an output of the processor for broadcasting the modified IP data packet towards the plurality of receiving nodes of the IP broadcast network.

11. An IP broadcast network telecommunication apparatus, for reducing use of bandwidth in transporting an IP data packet having a data field and in the header a packet length field holding a packet length value L over the IP broadcast network from transmitting node of the IP broadcast network to a specific receving node among a plurality of receiving nodes of the IP broadcast network, whereby the apparatus comprises an IP data packet broadcasting decapsulator device (220, 222, 224, 226) including
- an input for receiving the IP data packet being transmitted from the transmitting node,
- an examining and processing device in communication with the input, being adapted to determine if the received IP data packet includes IP packet modifying identifier bytes that correspond to an identifier the specific receiving node, and to process, if correspondence is determined, the modified IP data packet by removing the identifier bytes from the data field and replacing the new packet length value L' by the packet length value L obtained by subtracting the identifier byte number C from the new packet length value L', thereby recovering an unmodified IP data packet, and to output the recovered, unmodified IP data packet on an output towards an IP data packet receiving device.

12. A computer program product carrying computer executable instructions for adapting an operating computer device to carry out the method of any one of claims 1 - 9.

13. A computer program product carrying computer executable instructions for configuring a device comprising an operating computer into the apparatus of claim 10.

14. A computer program product carrying computer executable instructions for configuring a device comprising an operating computer into the apparatus of claim 11.

## Patentansprüche

1. Verfahren zur Reduzierung der Verwendung einer Bandbreite beim Transport eines IP-Datenpakets mit einem Datenfeld und im Header einem Paketlängenfeld, das einen Paketlängenwert L über ein IP-Broadcast-Netzwerk von einem Übertragungs-Encapsulator zu einem spezifischen Empfangs-Decapsulator unter einer Mehrzahl von Decapsulatoren trägt, die zum Empfangen von IP-Datenpaketen angepasst sind,
wobei das Verfahren umfasst
- Empfangen des IP-Datenpakets im Encapsulator (210),
- im Encapsulator Verarbeiten (730) des IP-Datenpakets durch Einführung einer Zahl C von Identifizierer-Bytes in das Datenfeld, um einen Identifizierer des spezifischen Decapsulators zu vertreten, und Ersetzen des Paketlängenwerts L durch einen neuen Paketlängenwerts L', welcher gleich der Summe des Paketlängenwerts L und der Identifizierer-Bytezahl C ist, um ein modifiziertes IP-Datenpaket zu erzeugen,
- Nachrechnen der Header-Prüfsumme im modifizierten IP-Datenpaket, falls das IP-Datenpaket ein IPv4-Datenpaket ist,
- Übertragen des modifizierten IP-Datenpakets vom Encapsulator,
- Empfangen des modifizierten IP-Datenpakets im Decapsulator (220, 222, 224, 226),
- im Decapsulator Prüfen der Identifizierer-Bytes im modifizierten IP-Datenpaket zur Bestimmung, ob die Identifizierer-Bytes mit dem Identifizierer des spezifischen Decapsulators übereinstimmen, und
- falls Übereinstimmung festgestellt wird, Verarbeiten des modifizierten IP-Datenpakets im Decapsulator durch Entfernung der Identifizierer-Bytes vom Datenfeld und Ersetzen des neuen Paketlängenwerts L' durch den Paketlängenwert L, der durch Abziehen der Identifizierer-Bytezahl C vom neuen Paketlängenwert L' erzielt wird, um das IP-Datenpaket wiederherzustellen, und Abgeben des IP-Datenpakets vom Decapsulator.

2. Verfahren nach Anspruch 1, wobei die langen IP-Datenpakete vor einer Verwendung von in dem Anspruch 1 beschriebenen Schritten in mehrere Fragment-IP-Datenpakete vorfragmentiert werden, um zu verhindern, dass IP-Datenpakete durch das IP-Broadcast-Netzwerk fragmentiert werden.

3. Verfahren nach Anspruch 1, wobei Einführung von Identifizierer-Bytes in das Datenfeld die Einführung der Identifizierer-Bytes als die letzten Bytes des Datenfelds umfasst.

4. Verfahren nach Anspruch 1, wobei Einführung von Identifizierer-Bytes in das Datenfeld die Einführung der Identifizierer-Bytes in einen beliebigen vorbestimmten Ort im Datenfeld umfasst.

5. Verfahren nach Anspruch 1, wobei ein einzelnes Identifizierer-Byte den IP-Datenpaketen im Encapsulator hinzugefügt wird, wodurch die Bandbreite reduziert wird, was für die Identifikation des Empfangsdecapsualtors verglichen mit anderen bekannten Identifizierer-Verfahren wie beispielsweise MAC-Adressen, VLAN, IP- Tunneling, MPLS, IPsec notwendig ist, die alle mehrere Bytes des Overheads per IP-Datenpaket hinzufügen.

6. Verfahren nach Anspruch 1, wobei eine Anzahl von Identifizierer-Bytes den IP-Datenpaketen im Encapsulator hinzugefügt wird, wodurch die Identifikation einer großen Anzahl der Empfangsdecapsulatoren ermöglicht wird, oder die Verwendung von Mehrbyte-Identifizierern zum Transportieren zusätzlicher Informationen vom Encapsulator zu Decapsulatoren (wie beispielsweise MPLS-Tags, MAC-Adressen, VLAN-Identifizierern, QoS-Parametern usw.) erlaubt wird.

7. Verfahren nach Anspruch 1, wobei modifizierte IP-Datenpakete über eine Legacy-Infrastruktur wie beispielsweise IP-Router oder Übertragungsausrüstung unter Einbeziehung von IP-Routern übertragen werden, mit der Fähigkeit, nur gültige IP-Datenpakete zu transportieren.

8. Verfahren nach einem der vorhergehenden Ansprüche, umfassend Bereitstellen eines IP-Datenpaket-Broadcast-fähigen Übertragungsknotens mit dem Encapsulator.

9. Verfahren nach einem der vorhergehenden Ansprüche, umfassend Bereitstellen eines IP-Datenpaket-Broadcast-fähigen Empfangsknotens mit dem Decapsulator.

10. IP-Broadcast-Netzwerk-Telekommunikationsvorrichtung zur Reduzierung der Verwendung einer Bandbreite beim Transport eines IP-Datenpakets mit einem Datenfeld und im Header einem Paketlängenfeld, das einen Paketlängenwert L über das IP-Broadcast-Netzwerk von einem Übertragungsknoten des IP-Broadcast-Netzwerks zu einem spezifischen Empfangsknoten unter einer Mehrzahl von Empfangsknoten des IP-Broadcast-Netzwerks trägt, wobei die Vorrichtung umfasst ein IP-Datenpaket-Übertragungs-Encapsulator-Gerät enthaltend
- einen Eingang zum Empfangen des IP-Datenpakets,
- einen Prozessor, der mit dem Eingang zum Erzeugen eines modifizierten IP-Datenpakets in Kommunikation steht, welcher Prozessor dazu angepasst ist, eine Zahl C von Identifizierer-Bytes in das Datenfeld des empfangenen IP-Datenpakets einzuführen, um einen Identifizierer zu vertreten, entsprechend dem spezifischen Empfangsknoten, und den Paketlängenwert L durch einen neuen Paketlängenwert L' zu ersetzen, welcher der Summe des Paketlängenwerts L und der Identifizierer-Bytezahl C gleich ist, und die IPv4-Header-Prüfsumme im modifizierten IP-Datenpaket nachzurechnen, falls das empfangene IP-Datenpaket in Übereinstimmung mit IPv4 ist, und
- ein IP-Datenpaket-Übertragungsgerät, das mit einen Ausgang des Prozessors zum Übertragen des modifizierten IP-Datenpakets an die Mehrzahl von Empfangsknoten des IP-Broadcast-Netzwerks in Kommunikation steht.

11. IP-Broadcast-Netzwerk-Telekommunikationsvorrichtung zur Reduzierung der Verwendung einer Bandbreite beim Transport eines IP-Datenpakets mit einem Datenfeld und im Header einem Paketlängenfeld, das einen Paketlängenwert L über das IP-Broadcast-Netzwerk von einem Übertragungsknoten des IP-Broadcast-Netzwerks zu einem spezifischen Empfangsknoten unter einer Mehrzahl von Empfangsknoten des IP-Broadcast-Netzwerks trägt, wobei die Vorrichtung umfasst
ein IP-Datenpaket-Übertragungs-Decapsulator-Gerät (220, 222, 224, 226) enthaltend
- einen Eingang zum Empfangen des vom Übertragungsknoten übertragenen IP-Datenpakets,
- ein mit dem Eingang in Kommunikation stehendes Prüf- und Verarbeitungsgerät, welches dazu angepasst ist, falls das empfangene IP-Datenpaket IP-Paket-modifizierende Identifizierer-Bytes enthält, die mit einem Identifizierer übereinstimmen, den spezifischen Empfangsknoten zu bestimmen, und, falls Übereinstimmung festgestellt wird, das modifizierte IP-Datenpaket zu verarbeiten, indem die Identifizierer-Bytes vom Datenfeld entfernt werden, und der neue Paketlängenwert L' durch den Paketlängenwert L ersetzt wird, der durch Abziehen der Identifizierer-Bytezahl C vom neuen Paketlängenwert L' erzielt wird, wodurch ein unmodifiziertes IP-Datenpaket wiederhergestellt wird, und das wiederhergestellte, unmodifizierte IP-Datenpaket an einem Ausgang an ein IP-Datenpaket-Empfangsgerät abzugeben.

12. Computerprogrammprodukt, welches computerausführbare Anweisungen für das Anpassen eines in Betrieb befindlichen Computergeräts zur Durchführung des Verfahrens nach einem der Ansprüche 1 - 9 trägt.

13. Computerprogrammprodukt, welches computerausführbare Anweisungen für das Einbauen eines Geräts, umfassend einen in Betrieb befindlichen Computer, in die Vorrichtung nach Anspruch 10 trägt.

14. Computerprogrammprodukt, welches computerausführbare Anweisungen für das Einbauen eines Geräts, umfassend einen in Betrieb befindlichen Computer, in die Vorrichtung nach Anspruch 11 trägt.

## Revendications

1. Procédé permettant de réduire l'utilisation de largeur de bande dans le transport d'un paquet de données IP ayant un champ de données et dans l'en-tête, un champ de longueur de paquet contenant une valeur de longueur de paquet L sur un réseau de diffusion IP à partir d'un dispositif d'encapsulation de radiodiffusion à un récepteur de décapsulation spécifique parmi une pluralité de dispositifs de décapsulation adaptés pour recevoir des paquets de données IP,
le procédé comprenant les étapes
- la réception du paquet de données IP dans le dispositif d'encapsulation (210),
- le traitement (730)
dans le dispositif d'encapsulation, du paquet de données IP en introduisant dans le champ de données un nombre C d'octets d'identification pour représenter un identifiant du dispositif de décapsulation spécifique, et le remplacement de la valeur de longueur de paquet L par une nouvelle valeur de longueur de paquet L' étant égale à la somme de la valeur de longueur de paquet L et le nombre d'octets d'identification C, pour générer un paquet de données IP modifiée,
- le recalcul de la somme de contrôle dans l'en-tête dans le paquet de données IP modifié si le paquet de données IP est un paquet de données IPv4,
- la diffusion du paquet de données IP modifié venant du dispositif d'encapsulation,
- la réception du paquet de données IP modifié dans le dispositif de décapsulation (220, 222, 224, 226),
- l'examen dans le dispositif de décapsulation, des octets d'identification dans le paquet de données IP modifié afin de déterminer si les octets d'identification correspondent à l'identifiant du dispositif de décapsulation spécifique, et
- si la correspondance est déterminée, le traitement dans le dispositif de décapsulation, du paquet de données IP modifié par la suppression des octets d'identification à partir du champ de données et le remplacement de la nouvelle valeur de longueur de paquet L' par la valeur de longueur de paquet L obtenue en soustrayant le nombre d'octets d'identification C de la nouvelle valeur de longueur de paquet L', pour récupérer le paquet de données IP, et délivrer en sortie le paquet de données IP à partir du dispositif de décapsulation.

2. Procédé selon la revendication 1, dans lequel les paquets longs de données IP sont pré-fragmentés en multiples paquets de données IP fragmentés avant d'appliquer les étapes décrites dans la revendication 1, pour éviter des paquets de données IP étant fragmentés par le réseau de diffusion de données IP.

3. Procédé selon la revendication 1, dans lequel l'introduction d'octets d'identification dans le champ de données comprend l'introduction des octets d'identification comme les derniers octets du champ de données.

4. Procédé selon la revendication 1, dans lequel l'introduction d'octets d'identification dans le champ de données comprend l'introduction des octets d'identification dans toute location prédéterminée du champ de données.

5. Procédé selon la revendication 1, dans lequel un octet d'identification unique est ajouté aux paquets de données IP dans le dispositif d'encapsulation, réduisant ainsi la largeur de bande nécessaire pour l'identification du dispositif de décapsulation de réception par rapport à d'autres méthodes d'identification connus, tels que des adresses MAC, VLAN, transmission tunnel IP, MPLS, IPSec qui ajoutent tous plusieurs octets de de l'entête par paquet de données IP.

6. Procédé selon la revendication 1, dans lequel une pluralité d'octets d'identification sont ajoutés aux paquets de données IP dans le dispositif d'encapsulation, fournissant ainsi la place pour l'identification d'un grand nombre de dispositifs de décapsulation de réception, ou pour permettre l'utilisation d'identificateurs multi-octets pour le transport d'information supplémentaire à partir des dispositifs d'encapsulation aux dispositifs de décapsulation (tels que des étiquettes MPLS, les adresses MAC, les identifiants VLAN, les paramètres de qualité de service, etc.)

7. Procédé de la revendication 1, dans lequel des paquets de données IP modifiés sont diffusés sur l'infrastructure existante, tels que des routeurs IP ou des équipements de transmission intégrant des routeurs IP, capables de transporter uniquement des paquets de données juridiques IP.

8. Procédé selon l'une quelconque des revendications précédentes, comprenant la fourniture d'un noeud de transmission activé à la diffusion de paquets de données IP avec le dispositif d'encapsulation.

9. Procédé selon l'une quelconque des revendications précédentes, comprenant la fourniture d'un noeud de transmission activé à la diffusion de paquets de données IP avec le dispositif de décapsulation.

10. Dispositif de télécommunication de réseau de diffusion IP, permettant de réduire l'utilisation de largeur de bande dans le transport d'un paquet de données IP ayant un champ de données et dans l'en-tête, un champ de longueur de paquet contenant une valeur de longueur de paquet L sur le réseau de diffusion IP à partir du noeud de transmission du réseau de diffusion IP à un noeud de réception spécifique parmi une pluralité de noeuds de réception du réseau de diffusion IP,
le dispositif comprenant
un dispositif d'encapsulation de diffusion de paquet de données IP, comprenant
- une entrée pour recevoir le paquet de données IP,
- un processeur en communication avec l'entrée pour générer un paquet de données IP modifié, le processeur étant adapté pour introduire dans le champ de données du paquet de données IP reçu un nombre C d'octets d'identification pour représenter un identifiant correspondant au noeud de réception spécifique, et pour remplacer la valeur de longueur de paquet L par une nouvelle valeur de longueur de paquet L' étant égale à la somme de la valeur de longueur de paquet L et le numéro d'octet d'identification C, et de recalculer la somme de contrôle dans l'en-tête IPv4-tête dans le paquet de données IP modifié si le paquet de données IP reçu est selon l'IPv4, et
- un dispositif de diffusion de paquets de données IP en communication avec une sortie du processeur pour diffuser le paquet de données IP modifié vers la pluralité de noeuds de réception du réseau de diffusion IP.

11. Dispositif de télécommunication de réseau de diffusion IP, permettant de réduire l'utilisation de largeur de bande dans le transport d'un paquet de données IP ayant un champ de données et dans l'en-tête, un champ de longueur de paquet contenant une valeur de longueur de paquet L sur le réseau de diffusion IP à partir du noeud de transmission du réseau de diffusion IP à un noeud de réception spécifique parmi une pluralité de noeuds de réception du réseau de diffusion IP,
le dispositif comprenant
un dispositif de décapsulation de diffusion de paquet de données IP (220, 222,224,226)
comprenant
- une entrée pour recevoir le paquet de données IP étant transmis à partir du noeud de transmission,
- un dispositif d'examen et de traitement en communication avec l'entrée, étant adapté pour déterminer si le paquet de données IP reçu comprend des octets d'identification modifiant le paquet IP qui correspondent à un identificateur du noeud de réception spécifique, et pour traiter, si la correspondance est déterminée, le paquet de données IP modifié en supprimant les octets d'identification du champ de données et remplaçant la nouvelle valeur de longueur de paquet L' par la valeur de longueur de paquet L obtenue en soustrayant le nombre octet d'identification C de la nouvelle valeur de longueur de paquet L', récupérant ainsi un paquet de données IP non modifié et pour sortir un paquet de données IP récupéré non modifiée sur une sortie vers un dispositif de réception de paquet de données IP.

12. Produit de programme d'ordinateur portant des instructions exécutables informatiques pour l'adaptation d'un dispositif informatique d'exploitation pour exécuter le procédé selon l'une quelconque des revendications 1 - 9.

13. Produit de programme d'ordinateur portant des instructions exécutables informatiques pour la configuration d'un dispositif comprenant un ordinateur d'exploitation dans le dispositif selon la revendication 10.

14. Produit de programme d'ordinateur portant des instructions exécutables informatiques pour la configuration d'un dispositif comprenant un ordinateur d'exploitation dans le dispositif selon la revendication 11.
